# EUROPEAN PATENT APPLICATION

(11) **EP 4 564 467 A1**
(43) Date of publication of application: **04.06.2025**
(21) Application number: 23846516.5
(22) Date of filing: 25.07.2023
(51) Int. Cl.: H01M 4/139, H01M 4/04, H01M 4/36, H01M 4/62

(54) **ELECTRODE MATERIAL MANUFACTURING METHOD, BATTERY ELECTRODE MANUFACTURING METHOD, AND BATTERY MANUFACTURING METHOD**

(30) Priority: 28.07.2022 JP 2022120973
(71) Applicant: FUJIFILM Corporation, Tokyo 106-8620 (JP)
(72) Inventor: TAKANO, Ikuo, ashigara-shi, Kanagawa 250-0193 (JP); IWASE, Eijiro, ashigara-shi, Kanagawa 250-0193 (JP)
(74) Representative: Meissner Bolte Partnerschaft mbB
(86) International application number: PCT/JP2023/027221
(87) International publication number: WO 2024/024786

(57) **Abstract**

Provided are a production method of an electrode material, including a classification step of classifying an active material into two or more active material groups having different average particle diameters, a first treatment step of subjecting each of the two or more active material groups to a surface smoothing treatment, and a mixing step of mixing the two or more active material groups after the surface smoothing treatment with an electrolytic solution; and applications thereof.

## Description

### BACKGROUND OF THE INVENTION

### 1. Field of the Invention

The present disclosure relates to a production method of an electrode material, a manufacturing method of an electrode for a battery, and a manufacturing method of a battery.

### 2. Description of the Related Art

In recent years, development of a semi-solid state battery has been studied.

An electrode applied to the semi-solid state battery is manufactured using, for example, an electrode material containing at least an active material which is a powder and an electrolytic solution.

For example, JP2012-234808A discloses a production method of a lithium manganese oxide positive electrode active material for a lithium ion secondary battery, in which two or more kinds of spherical spinel-type lithium manganese oxide particles having different particle sizes are mixed, and also discloses an electrode material containing the produced positive electrode active material. Furthermore, JP2012-234808A also discloses that the size and shape of the manganese oxide particles are controlled by milling.

### SUMMARY OF THE INVENTION

An electrode material used in a case of manufacturing an electrode applied to a semi-solid state battery is usually a Bingham plastic fluid that contains a large amount of an active material which is a powder, compared to an electrolytic solution, is clay-like, and has a yield value. Therefore, in the electrode material which is a Bingham plastic fluid, it is desirable that the yield value is low from the viewpoint of exhibiting fluidity with a smaller shearing force in a case of manufacturing the electrode, in terms of improving work efficiency such as molding.

Therefore, the present disclosure has been made in view of the above-described circumstances.

An object of one embodiment of the present disclosure is to provide a production method of an electrode material, in which an electrode material having a low yield value is obtained.

An object of another embodiment of the present disclosure is to provide a manufacturing method of an electrode or a manufacturing method of a battery, using the above-described production method of an electrode material.

The present disclosure includes the following aspects.
<1> A production method of an electrode material, comprising:
   a classification step of classifying an active material into two or more active material groups having different average particle diameters;
   a first treatment step of subjecting each of the two or more active material groups to a surface smoothing treatment; and
   a mixing step of mixing the two or more active material groups after the surface smoothing treatment with an electrolytic solution.
<2> The production method of an electrode material according to <1>,
   in which the surface smoothing treatment in the first treatment step is a surface treatment by mechanochemistry.
<3> The production method of an electrode material according to <1> or <2>, further comprising, after the first treatment step and before the mixing step:
   a second treatment step of mixing each of the two or more active material groups after the surface smoothing treatment with a conductive auxiliary agent, and subjecting each of the obtained two or more mixtures to a mechanochemical treatment.
<4> The production method of an electrode material according to any one of <1> to <3>,
   in which the classification of the active material in the classification step is carried out using an air classification device.
<5> A manufacturing method of an electrode for a battery, comprising:
   a step of producing an electrode material by the production method according to any one of <1> to <4>; and
   a step of molding the produced electrode material.
<6> A manufacturing method of a battery, comprising:
   a step of manufacturing a positive electrode by the manufacturing method according to <5>.

According to one embodiment of the present disclosure, there is provided a production method of an electrode material, in which an electrode material having a low yield value is obtained.

According to another embodiment of the present disclosure, there are provided a manufacturing method of an electrode or a manufacturing method of a battery, using the above-described production method of an electrode material.

### DESCRIPTION OF THE PREFERRED EMBODIMENTS

Hereinafter, embodiments of the present disclosure will be described. The present disclosure is not limited in any way to the following embodiments, and may be implemented with appropriate modifications within the scope of the purpose of the present disclosure.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

### <Production method of electrode material>

The production method of an electrode material according to the present disclosure is a production method of an electrode material, including a classification step of classifying an active material into two or more active material groups having different average particle diameters, a first treatment step of subjecting each of the two or more active material groups to a surface smoothing treatment, and a mixing step of mixing the two or more active material groups after the surface smoothing treatment with an electrolytic solution.

For example, lithium iron phosphate (LFP) which is a representative positive electrode active material generally has a carbon coating formed on a surface thereof to improve conductivity, and the surface thereof often has unevenness. In a case where an active material having a large surface area and having unevenness on the surface, such as the LFP, is used as an electrode material, a yield value of the electrode material tends to be high. It is presumed that this is because an electrolytic solution is likely to be held on the surface of the active material, and a proportion of the electrolytic solution which can move freely in the electrode material is reduced, so that dispersibility of the active material is reduced and a viscosity of the electrode material is increased.

Therefore, an electrode material having a low yield value is obtained by carrying out a surface smoothing treatment and using an active material in which unevenness on the surface is reduced, but in some cases, a sufficient effect of reducing the yield value cannot be obtained. In particular, when an active material having a distribution in particle size is used for the purpose of increasing a filling rate of the active material in the electrode, even in a case where the active material is subjected to a surface smoothing treatment, a sufficient effect of reducing the yield value is not often obtained. The reason for this is presumed to be that progress of the surface smoothing treatment is different between a small diameter side and a large diameter side of the active material, and the surface smoothing treatment of the active material on the large diameter side is not sufficiently advanced, and thus the proportion of the electrolytic solution which can move freely in the electrode material does not increase.

Therefore, the present inventors have conducted studies and found the production method of an electrode material according to the present disclosure, in which a surface smoothing treatment is separately performed on each of two or more active material groups having different average particle diameters obtained by a classification step, and then the two or more active material groups after the surface smoothing treatment are mixed with an electrolytic solution.

Hereinafter, each step in the production method of an electrode material according to the present disclosure will be described.

### [Classification step]

The production method of an electrode material according to the present disclosure includes a classification step of classifying an active material into two or more active material groups having different average particle diameters.

In the present step, the active material prepared in advance (that is, the active material before the classification) is classified into two or more active material groups having different average particle diameters.

Details of the active material before the classification will be described later.

It is sufficient that the number of compound groups obtained by the classification is two or more, but from the viewpoint of efficiency of the classification and the viewpoint of limitation by a classification unit to which the active material can be applied, it is preferably two or three and more preferably two. That is, in the present step, it is preferable that the active material prepared in advance is classified into two or three active material groups having different average particle diameters; and it is more preferable that the active material prepared in advance is classified into two active material groups having different average particle diameters.

Conditions for the classification in the present step may be determined, for example, according to the particle size distribution of the active material before the classification, the type of the surface smoothing treatment, and the like.

For example, a classification point of the classification in the present step can be determined in consideration of the fact that there is a difference in progress of the surface smoothing treatment and the balance of the efficiency of the surface smoothing treatment.

From the viewpoint that the progress of the surface smoothing treatment is likely to vary, it is preferable to classify the active material such that, for example, a ratio of a specific surface area between the classified active material groups is 4 or more (preferably 9 or more). Specifically, in a case of an active material in which a width of D₁₀ (a particle diameter at which a cumulative volume frequency reaches 10% from the small diameter side) to D₉₀ (a particle diameter at which the cumulative volume frequency reaches 90% from the small diameter side) in a particle size distribution is 1 µm to 6 µm, for example, it is preferable to carry out classification such that an average particle diameter on the small diameter side is 1.5 µm and an average particle diameter on a large diameter side is 3 µm or more. In this way, by setting the average particle diameter on the large diameter side to be 2 times or more the average particle diameter on the small diameter side (that is, by setting a particle diameter ratio to be 2 or more), a ratio of a specific surface area on the large diameter side to a specific surface area on the small diameter side can be set to be 4 or more. In the above-described case, it is more preferable to carry out classification such that the average particle diameter on the small diameter side is 1.5 µm and the average particle diameter on the large diameter side is 4.5 µm or more. In this way, by setting the average particle diameter on the large diameter side to be 3 times or more the average particle diameter on the small diameter side (that is, by setting the particle diameter ratio to be 3 or more), the ratio of the specific surface area on the large diameter side to the specific surface area on the small diameter side can be set to be 9 or more.

In addition, in a case of classifying the active material into two active material groups having different average particle diameters, from the viewpoint of efficiency of the surface smoothing treatment, for example, a mass ratio of the two active material groups is preferably set to small diameter group:large diameter group = 20%:80% to 80%:20%.

In particular, in the present step, it is preferable that the active material groups are classified into two active material groups having different average particle diameters such that the ratio of the specific surface area between the classified active material groups is 4 or more (preferably 9 or more), and the mass ratio of the two active material groups is small diameter group:large diameter group = 20%:80% to 80%:20%.

The average particle diameter in the active material group is a particle diameter at which the cumulative volume frequency reaches 50% from the small diameter side in the particle size distribution, that is, a so-called median diameter (D₅₀).

The average particle diameter in the active material group can be measured with a laser diffraction/scattering-type particle size distribution analyzer (for example, LA-960 manufactured by Horiba, Ltd.). The measurement of the particle diameter may be a wet method or a dry method.

A classification unit in the present step is not particularly limited, and a known dry classification unit or wet classification unit which can be used for classifying the active material can be used; but a dry classification unit is preferably used.

From the viewpoint of being suitable for the classification of the active material, it is preferable to use an air classification device as the classification unit, and it is more preferable to use an air flow classifier using a Coanda effect. Examples of the air classification device include Elbow-Jet classifier (Nittetsu Mining Co.,Ltd.), HIPREC classifier (POWDER SYSTEMS CORPORATION), and Turboplex (registered trademark) ATP (Hosokawa Micron Group).

In the present step, in addition to classifying the active material into two or more active material groups having different average particle diameters, coarse powder or fine powder may be removed.

### [First treatment step]

In the production method of an electrode material according to the present disclosure, a first treatment step of subjecting each of the two or more active material groups to a surface smoothing treatment is performed after the classification treatment.

The surface smoothing treatment in the present step is not particularly limited as long as it can reduce unevenness of the surface of the active material, and a known surface smoothing treatment for powder can be used.

Among these, from the viewpoint of efficiency of the surface smoothing treatment and viewpoint of easily suppressing disintegration of the active material, it is preferable that the surface smoothing treatment in the present step is a surface treatment by mechanochemistry.

A device used for the surface treatment by mechanochemistry is generally a device which performs the surface treatment for powder with shearing energy generated by a rotation of a shearing blade or a metal furnace by putting the powder into a clearance between the shearing blade and the metal furnace. The surface of the powder is polished by the shear energy applied to the powder charged into the device, and the surface is smoothed. In particular, in a case where the powder is a hard material, the surface of the powder is polished even by shearing the powder, and the surface is smoothed. In the present step, it is preferable to reduce the unevenness of the surface of the active material by using the principle to achieve surface smoothing.

Examples of the device used for the surface treatment by mechanochemistry include circulation type Mechanofusion (registered trademark) system AMS (Hosokawa Micron Group), Nobilta (registered trademark) NOB (Hosokawa Micron Group), a hybridization system (Nara Machinery Co., Ltd.), COMPOSI (NIPPON COKE & ENGINEERING. CO., LTD.), and Mechano Hybrid (NIPPON COKE & ENGINEERING. CO., LTD.).

The term "mechanochemistry" means that a mechanical action is applied to a treatment target to cause a chemical change. Therefore, the device used for the surface treatment by mechanochemistry can perform not only the surface smoothing of the powder but also the sticking of the powder.

However, in the present step, since the surface smoothing may be performed on each of the two or more active material groups, the surface treatment by mechanochemistry may be carried out under conditions for polishing the unevenness of the surface of the active material.

In general, since the surface of the active material on the large diameter side is not easily subjected to the surface smoothing treatment, it is preferable that the surface treatment by mechanochemistry is carried out under longer or stronger conditions on the active material group on the larger diameter side among the two or more active material groups. For example, for an active material group on a larger diameter side among the two or more active material groups, the surface treatment by mechanochemistry may be carried out for a longer time than an active material group on a smaller diameter side.

In the present step, the surface smoothing treatment on the active material is preferably carried out, for example, until a yield value required for the electrode material in a case of being applied to the electrode material is achieved.

Specifically, the degree of the surface smoothing treatment on the active material can be set to, for example, a liquid absorption amount of the active material. For example, the surface smoothing treatment on the active material is preferably carried out until the liquid absorption amount of the active material is reduced by, for example, 5% or more, and more preferably carried out until the liquid absorption amount of the active material is reduced by 10% or more.

In addition, in a case where the surface smoothing treatment is carried out under the same conditions on the active material on the small diameter side and the active material on the large diameter side, the liquid absorption amount of the active material on the large diameter side is larger than that of the active material on the small diameter side. Therefore, it is preferable to carry out the surface smoothing treatment until the liquid absorption amount of the active material on the large diameter side is substantially equal to that of the active material on the small diameter side.

The liquid absorption amount of the active material is obtained by the following method.

That is, an electrolytic solution having the following formulation is added to 100 g of the active material continuously while gradually decreasing the addition amount from 10 g to 0.1 g, and an amount (g) of the electrolytic solution added when a mixture of the active material and the electrolytic solution becomes slurry (muddy) is determined as the liquid absorption amount of the active material. The liquid absorption amount is measured in a dry room at 23°C and 0.1 %RH or less.

Electrolytic solution: mixed solution of ethylene carbonate (EC)/propylene carbonate (PC)/diethyl carbonate (DEC)/LiPF₆/vinylene carbonate (VC) = 38.9% by mass/8.6% by mass/38.9% by mass/11.6% by mass/2.0% by mass

The surface treatment by mechanochemistry can be carried out under, for example, the following conditions.

In the surface treatment by mechanochemistry, a circumferential speed of the shearing blade is preferably 15 m/s or more and more preferably 30 m/s or more, and may be even higher. As the circumferential speed of the shearing blade increases, mill energy increases, and the treatment time can be shortened. However, the circumferential speed of the shearing blade is appropriately selected so that an unintended change (such as alteration, deterioration, or crushing of the active material) does not occur in the active material.

In the surface treatment by mechanochemistry, the mill energy is measured from a difference in load power during loading of the powder (active material) with respect to no-load power of the device. In addition, the mill energy may be calculated as energy per amount of the input powder (active material).

The mill energy may be appropriately selected depending on conditions such as a desired degree of surface smoothness, the above-described circumferential speed of the shearing blade, and the temperature during the surface treatment; and may be, for example, 500 kJ/kg to 10,000 kJ/kg.

The mill energy of each of the active material on the small diameter side and the active material on the large diameter side may be appropriately selected with reference to the ratio of the specific surface area. For example, in a case where the ratio of the specific surface area on the large diameter side to the specific surface area on the small diameter side is 6, the mill energy of the active material on the large diameter side is approximately 3 times to 9 times that of the active material on the small diameter side.

As the mill energy is higher, the treatment temperature is higher. Therefore, it is desirable to cool the chamber so that the temperature of the chamber does not become high and so that the active material does not undergo unintended alteration, deterioration, or the like. Therefore, it is preferable that the surface treatment temperature is controlled to 10°C to 200°C. In addition, in order to prevent the active material from being oxidized, it is also preferable to fill the inside of the device with an inert gas.

### [Mixing step]

In the production method of an electrode material according to the present disclosure, after the first treatment step, a mixing step of mixing the two or more active material groups after the surface smoothing treatment with an electrolytic solution is performed.

In the present step, it is sufficient that the two or more active material groups after the surface smoothing treatment is mixed with the electrolytic solution, and a mixing unit is not particularly limited. Examples of the mixing unit include a ball mill, a beads mill, a planetary mixer, a blade mixer, a roll mill, a kneader, and a disc mill.

The mixing may be carried out by first mixing the two or more active material groups after the surface smoothing treatment and then mixing an electrolytic solution therewith, or may be carried out by mixing the two or more active material groups after the surface smoothing treatment and an electrolytic solution at once.

In addition, in the present step, other components such as a conductive auxiliary agent may be mixed with the two or more active material groups after the surface smoothing treatment and the electrolytic solution.

### [Second treatment step]

In the production method of an electrode material according to the present disclosure, it is preferable to further include, after the first treatment step and before the mixing step, a second treatment step of mixing each of the two or more active material groups after the surface smoothing treatment with a conductive auxiliary agent, and subjecting each of the obtained two or more mixtures to a mechanochemical treatment.

In the present step, by subjecting a mixture of the active material and the conductive auxiliary agent to a treatment by mechanochemistry, composite particles in which the conductive auxiliary agent is embedded in the active material and the conductive auxiliary agent is attached and immobilized on the surface of the active material are obtained.

In a case where the electrode material contains an aggregate of the conductive auxiliary agent, the electrolytic solution is constrained in the aggregate of the conductive auxiliary agent, and a proportion of the electrolytic solution which can move freely in the electrode material may decrease. By performing the present step to obtain the composite particles as described above, the aggregate of the conductive auxiliary agent is reduced, the electrolytic solution constrained in the aggregate of the conductive auxiliary agent is reduced, and as a result, an electrode material having a lower yield value can be obtained. **In** addition, since the active material and the conductive auxiliary agent are in contact with each other in the composite particles as described above, conductivity is likely to be exhibited. Therefore, by performing the present step to obtain the composite particles as described above, it is also possible to obtain an electrode material capable of improving electrode performance and battery performance.

In the present step, since it is desirable to obtain the above-described composite particles, a treatment by mechanochemistry may be carried out under conditions in which the conductive auxiliary agent is embedded in the surface of the active material.

In the present step, examples of a device used for the treatment by mechanochemistry include the same device as the device used for the surface treatment by mechanochemistry in the first treatment step.

In the present step, the treatment on the active material and the conductive auxiliary agent by mechanochemistry is preferably carried out, for example, until a yield value required for the electrode material in a case of being applied to the electrode material is achieved.

Specifically, the degree of the treatment on the active material and the conductive auxiliary agent by mechanochemistry can be set to, for example, a liquid absorption amount of the active material and the conductive auxiliary agent. Similar to the reduction of the liquid absorption amount of the active material in the first treatment step, the treatment on the active material and the conductive auxiliary agent by mechanochemistry is preferably carried out until the liquid absorption amount of the composite material of the active material and the conductive auxiliary agent is reduced, for example, by 5% or more, and more preferably carried out until the liquid absorption amount is reduced by 10% or more.

In the treatment of the active material and the conductive auxiliary agent by mechanochemistry of the present step, in a case where the treatment is intended to be carried out for the purpose of forming a composite of the active material and the conductive auxiliary agent, it is desirable that the mill energy is equivalent to or smaller than that of the surface smoothing treatment on the active material alone in the first treatment step. For example, the mill energy during the treatment of the active material and the conductive auxiliary agent by mechanochemistry is preferably 1/20 to the same as the mill energy during the surface smoothing treatment on the active material alone in the first treatment step. However, the mill energy during the treatment of the active material and the conductive auxiliary agent by mechanochemistry may be larger than the mill energy during the surface smoothing treatment on the active material alone in the first treatment step.

### [Other steps]

In the production method of an electrode material according to the present disclosure, any step may be performed as necessary in addition to the above-described steps.

Hereinafter, each component contained in the electrode material produced by the production method of an electrode material according to the present disclosure, that is, each component used in the production method of an electrode material according to the present disclosure will be described.

### (Active material)

The active material is a substance capable of intercalating and deintercalating ions of a metal element belonging to Group 1 or Group 2 in the periodic table. The active material is included in the solid components.

Examples of the active material include a positive electrode active material and a negative electrode active material.

### -Positive electrode active material-

The positive electrode active material is not limited, and a known active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi1/₃Co_{1/3}Mn_{1/3}O₂ (lithium nickel manganese cobalt oxide [NMC]).

The positive electrode active material may be a commercially available product, or may be a synthetic product produced by a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to easily form aggregates of the electrode material, and it is possible to suppress scattering of the electrode material during handling. In a case where the volume average particle diameter of the positive electrode active material is 40 µm or less, the thickness of the molded body for an electrode can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume frequency particle size distribution and a median diameter are obtained. A quartz cell is used as a cell for the measurement.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

The electrode material to be produced may contain only one kind of the positive electrode active material or may contain two or more kinds of the positive electrode active materials.

In addition, even in a case where the electrode material to be produced contains one kind of the positive electrode active material, positive electrode active materials having different particle diameters may be used in combination.

A content of the positive electrode active material with respect to the total volume of the electrode material to be produced is preferably 30% by volume to 75% by volume, more preferably 35% by volume to 70% by volume, and still more preferably 40% by volume to 65% by volume.

### -Negative electrode active material-

The negative electrode active material is not limited, and a known active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced by a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured by a method based on the method of measuring the volume average particle diameter of the positive electrode active material described above.

Examples of a method of adjusting the particle diameter of the negative electrode active material include a method of using a pulverizer or a classifier.

The electrode material to be produced may contain only one kind of the negative electrode active material or may contain two or more kinds of the negative electrode active materials.

A content of the negative electrode active material with respect to the total volume of the electrode material to be produced is preferably 30% by volume to 75% by volume, more preferably 35% by volume to 73% by volume, and still more preferably 45% by volume to 70% by volume.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material to be produced is preferably 70% by volume or less, more preferably 60% by volume or less, and still more preferably 55% by volume or less. In a case where the content of the electrolytic solution in the electrode material is 70% by volume or less, it is possible to suppress the electrolytic solution from bleeding out in a case where the electrode material is molded.

The lower limit of the content of the electrolytic solution in the electrode material may be more than 0% by volume, and it is preferably 30% by volume or more.

The electrode material to be produced may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The electrode material to be produced may contain only one kind of the solvent or may contain two or more kinds of the solvents.

A content of the liquid components (that is, the electrolytic solution and the solvent) with respect to the total volume of the electrode material to be produced is preferably 70% by volume or less, more preferably 60% by volume or less, and still more preferably 55% by volume or less.

In a case where the content of the liquid components in the electrode material is 70% by volume or less, it is possible to suppress the liquid components from bleeding out in a case where the electrode material is molded. In addition, in a case where the liquid components includes the solvent, deterioration in battery performance can be suppressed.

The lower limit of the content of the liquid components in the electrode material may be more than 0% by volume, and it is preferably 30% by volume or more.

The liquid component in the electrode material, that is, the component in the electrode material, which is in a liquid state at 25°C, is preferably in a liquid state even at -10°C and preferably in a liquid state even at -20°C. That is, the component in the electrode material, which is in a liquid state at 25°C, is preferably a component which does not solidify at -10°C, and preferably a component which does not solidify at -20°C.

### (Conductive auxiliary agent)

From the viewpoint of improving electron conductivity of the active material, the electrode material to be produced preferably contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The electrode material to be produced may contain only one kind of the conductive auxiliary agent or may contain two or more kinds of the conductive auxiliary agents.

In a case where the electrode material to be produced contains the conductive auxiliary agent, from the viewpoint of improving the electron conductivity of the active material, a content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

### (Other components)

The electrode material to be produced may contain a binder, a dispersant, and other additives in addition to the above-described components.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode material can be used.

### <Electrode material>

As described above, the electrode material produced by the production method of an electrode material according to the present disclosure has a low yield value.

Specifically, the yield value of the produced electrode material is preferably 120 kPa or less, more preferably 60 kPa or less, still more preferably 40 kPa or less, and particularly preferably 30 kPa or less. In a case where the yield value is 120 kPa or less, the electrode material exhibits fluidity with a small shearing force, and the work efficiency of molding and the like is improved.

Here, the yield value of the electrode material is measured as follows.

That is, the mixed electrode material is put into a container (for example, a cylindrical cup or the like), pressed from above with a pressure of approximately 0.1 MPa to 1 MPa through a holding device or the like, and solidified so that there is no gap between the constituent components of the electrode material, thereby preparing a measurement sample. Using a precision rotational viscometer (for example, a soft solid tester manufactured by Brookfield, RST-SST), a probe is inserted into the measurement sample (that is, a solidified electrode material), and a change in stress in a case where the probe is rotated at a constant speed is read to measure the yield value (yield stress).

In addition, the produced electrode material preferably contains an active material and has a concentration of solid components of 30% by volume or more. Here, the "has a concentration of solid components of 30% by volume or more" means that a content of the solid components with respect to the total volume of the electrode material is 30% by volume or more.

The concentration of solid components in the electrode material is preferably 40% by volume or more, and more preferably 45% by volume or more. The upper limit of the concentration of solid components in the electrode material may be less than 100% by volume, and is preferably 70% by volume or less.

Here, the concentration of solid components in the electrode material is calculated from a compositional ratio of each component contained in the electrode material and a specific gravity of the components.

Furthermore, the produced electrode material is obtained through the classification step, and often contains an active material having two or more peaks in a particle size distribution. The particle size distribution described herein is obtained by the same method as the volume frequency-particle size distribution of the positive electrode active material described above. The active material having two or more peaks in the particle size distribution means that a distribution having two or more peaks is observed on the obtained volume frequency-particle size distribution.

### <Manufacturing method of electrode for battery>

The manufacturing method of an electrode for a battery according to the present disclosure includes a step (also referred to as an electrode material producing step) of producing an electrode material by the production method of an electrode material according to the present disclosure, and a step (also referred to as a molding step) of molding the produced electrode material.

With the manufacturing method of an electrode for a battery according to the present disclosure, since an electrode material having a low yield value is used in the molding step, the work efficiency in the molding can be improved.

### [Electrode material producing step]

In the manufacturing method of an electrode for a battery according to the present disclosure, an electrode material producing step of producing an electrode material by the above-described production method of an electrode material according to the present disclosure is performed.

Details of the present step are the same as those of the production method of an electrode material according to the present disclosure, and preferred aspects thereof are also the same.

### [Molding step]

In the manufacturing method of an electrode for a battery according to the present disclosure, a molding step of molding the electrode material obtained in the electrode material producing step is performed.

The method of molding the electrode material is not particularly limited, and may be selected according to the shape, size, filling rate, and the like of the electrode for a battery.

Specifically, the present step may be, for example, a step of applying the electrode material onto a support to obtain a sheet-shaped molded body, or a step of injecting the electrode material into a mold to obtain a molded body having a desired shape.

In addition, for the molding of the electrode material, a molding method described in JP2017-533548A, JP2021-530829A, and the like, which describe a manufacturing method of an electrode, can also be used.

Among these, the present step is preferably a step of applying the electrode material onto a support to obtain a sheet-shaped molded body (also referred to as an electrode film).

### (Support)

The support used in the above-described step of obtaining the sheet-shaped molded body will be described.

The support is not particularly limited as long as it is a support capable of forming the sheet-shaped molded body of the electrode material on the surface.

Specific examples of a preferred support include a collector.

The collector which is an example of the support is not particularly limited, and a known collector (a positive electrode collector and a negative electrode collector) can be used.

Examples of the positive electrode collector include aluminum, an aluminum alloy, stainless steel, nickel, and titanium. The positive electrode collector is preferably aluminum or an aluminum alloy. The positive electrode collector may be aluminum having, on a surface thereof, a coating layer containing one or more of carbon, nickel, titanium, silver, gold, platinum, and vanadium oxide.

Examples of the negative electrode collector include aluminum, copper, a copper alloy, stainless steel, nickel, and titanium. The negative electrode collector is preferably aluminum, copper, a copper alloy, or stainless steel, and more preferably copper or a copper alloy. The negative electrode collector may be copper or stainless steel, having, on a surface thereof, a coating layer containing one or more of carbon, nickel, titanium, silver, and lithium.

The collector is preferably an aluminum foil (including an aluminum foil having the above-described coating layer on the surface thereof) or a copper foil (including a copper foil having the above-described coating layer on the surface thereof). The aluminum foil is generally used as a collector in a positive electrode. The copper foil is generally used as a collector in a negative electrode.

The collector used as the support may be a laminate of the metal layer exemplified as the positive electrode collector or the negative electrode collector described above and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

In addition, examples of the support include a release material.

Examples of the release material which is an example of the support include release paper (for example, peeling paper manufactured by LINTEC Corporation), a film having a release layer, and paper having a release layer; and among these, release paper is preferable.

In a case where the release material is used as the support, the sheet-shaped molded body formed on the release material can be transferred to the collector by utilizing releasability of the release material.

For example, an average thickness of the support (preferably, the collector) is preferably 3 µm or more, more preferably 5 µm or more, and particularly preferably 10 µm or more.

From the viewpoint of flexibility and lightness, the average thickness of the average thickness of the support (preferably, the collector) is preferably 100 µm or less, more preferably 70 µm or less, and particularly preferably 50 µm or less.

The average thickness of the support is an arithmetic average of thicknesses at three points measured by cross-sectional observation. In the cross-sectional observation, a known microscope (for example, a scanning electron microscope) can be used.

### [Other steps]

In the manufacturing method of an electrode for a battery according to the present disclosure, other steps may be performed in addition to the electrode material producing step and the molding step.

Examples of the other steps include a step of pressurizing the molded body, a step of attaching the molded body to a collector, and in a case where the support is release paper, a step of transferring the sheet-shaped molded body formed on the release paper to a collector.

In addition, as the other steps, various steps described in JP2017-533548A, JP2021-530829A, and the like, which describe a manufacturing method of an electrode, can also be used.

In this manner, an electrode for a battery is manufactured by the manufacturing method of an electrode for a battery according to the present disclosure.

The shape and size of the electrode for a battery may be determined according to the battery to be applied.

### <Manufacturing method of battery>

The manufacturing method of a battery according to the present disclosure includes a step (also referred to as a positive electrode manufacturing step) of manufacturing a positive electrode by the manufacturing method of an electrode for a battery according to the present disclosure.

### [Positive electrode manufacturing step]

In the manufacturing method of a battery according to the present disclosure, a positive electrode manufacturing step of manufacturing at least a positive electrode by the above-described manufacturing method of an electrode for a battery according to the present disclosure is performed.

Details of the present step are the same as those of the manufacturing method of an electrode for a battery according to the present disclosure, and preferred aspects thereof are also the same.

In the present step, the positive electrode is manufactured, but a negative electrode may be manufactured in addition to the positive electrode. That is, a negative electrode may be manufactured by the manufacturing method of an electrode for a battery according to the present disclosure.

### [Other steps]

Examples of other steps include a step of preparing a negative electrode or manufacturing a negative electrode by a method different from the positive electrode manufacturing step, a step of preparing or manufacturing a separator, and a step of bonding (laminating) a positive electrode, a separator, and a negative electrode.

Furthermore, examples of the other steps include a step of laminating single cells obtained by bonding a positive electrode, a separator, and a negative electrode, a step of attaching a tab-shaped electrode for connection to the outside to a positive electrode collector and a negative electrode collector in the laminate of the single cells, and a step of sealing the laminate of the single cells with an exterior member. Through these steps, a laminated cell can be manufactured.

In addition, as the other steps, various steps described in JP2017-533548A, JP2018-139219A, JP2021-530829A, and the like, which describe a manufacturing method of a battery, can also be used.

As the negative electrode and the separator used in the above-described step, known ones can also be used.

In this manner, a battery is manufactured by the manufacturing method of a battery according to the present disclosure. The manufactured battery is preferably a semi-solid state battery.

### Examples

Hereinafter, the present disclosure will be described in detail with reference to Examples, but the present disclosure is not limited thereto.

### [Example 1]

### (Classification step)

A positive electrode active material (lithium iron phosphate; "LFP NCO M121" manufactured by Aleees) was classified by an air classification device (Elbow-Jet classifier manufactured by Nittetsu Mining Co.,Ltd.), and classified into two active material groups of a small diameter group having a peak at 2 µm and a large diameter group having a peak at 5 µm. After the classification, fine powder having a size of 0.2 µm or less was removed.

A mass ratio of the small diameter group and the large diameter group was small diameter group:large diameter group = 60%:40%.

### (First treatment step)

The small diameter group obtained in the classification step was subjected to a surface smoothing treatment by mechanochemistry for 8 hours in an N₂ purging environment at a rotation speed of 2,500 revolutions per minute (rpm; the same applies hereinafter), a temperature of 25°C to 40°C (temperature rise was suppressed by a refrigerant), using a circulation type Mechanofusion (registered trademark) system AMS manufactured by Hosokawa Micron Group. At this time, a circumferential speed of a shearing blade was set to 20 m/s, and the mill energy was 5,000 kJ/kg.

In addition, the large diameter group obtained in the classification step was subjected to the same surface smoothing treatment by mechanochemistry for 48 hours. At this time, a circumferential speed of the shearing blade was set to 20 m/s, and the mill energy was 30,000 kJ/kg.

### (Mixing step)

104 g of the small diameter group and 70 g of the large diameter group after the first treatment step were prepared, 174 g of the total amount of the positive electrode active material and 2 g of a conductive auxiliary agent (Ketjen black; "CARBON ECP600JD" manufactured by LION SPECIALTY CHEMICALS CO., LTD.) were stirred at 1,500 rpm for 30 seconds with a mixer (AWATORI RENTARO ARE-310, manufactured by THINKY Corporation) to prepare a kneaded material (176 g).

The following electrolytic solution A (64 g) was added to the obtained kneaded material (176 g), and the mixture was stirred at 1,500 rpm for 120 seconds with a mixer (AWATORI RENTARO ARE-310, manufactured by THINKY Corporation) to obtain a positive electrode material (P1).

13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith. 64 g of the obtained 115.7 g of the mixed solution was taken out, and used as the electrolytic solution A.

In a case where a yield value of the obtained positive electrode material (P1) was measured by the method described above, it was 20 kPa.

In the obtained positive electrode material (P1), a volume ratio of the solid components and the liquid components was 48:52.

In addition, it was found that, from the particle size distribution of the active material in the obtained positive electrode material (P1), the maximum space filling rate was 68%, which was higher than the maximum space filling rate of approximately 66% by only the small diameter group and the maximum space filling rate of approximately 64% by only the large diameter group. As a result, it is presumed that an electrode containing an active material could be obtained with a high filling rate by using the positive electrode material (P1).

### [Example 2]

A positive electrode material (P2) was obtained in the same manner as in Example 1, except that the classification step and the first treatment step of Example 1 were performed, and then the following second treatment step and mixing step were performed.

### (Second treatment step)

A mixture obtained by mixing 104 g of the small diameter group after the first treatment step and 1.2 g of a conductive auxiliary agent (Ketjen black; "CARBON ECP600JD" manufactured by LION SPECIALTY CHEMICALS CO., LTD.) was subjected to a surface treatment by mechanochemistry for 1 hour in an N₂ purging environment at a rotation speed of 2,500 rpm, a temperature of 25°C to 40°C (temperature rise was suppressed by a refrigerant), using a circulation type Mechanofusion (registered trademark) system AMS manufactured by Hosokawa Micron Group. At this time, a circumferential speed of the shearing blade was set to 20 m/s, and the mill energy was 600 kJ/kg.

In addition, a mixture obtained by mixing 70 g of the large diameter group after the first treatment step and 0.8 g of a conductive auxiliary agent (Ketjen black; "CARBON ECP600JD" manufactured by LION SPECIALTY CHEMICALS CO., LTD.) was subjected to the same surface treatment by mechanochemistry for 6 hours as described above. At this time, a circumferential speed of the shearing blade was set to 20 m/s, and the mill energy was 3,600 kJ/kg.

### (Mixing step)

105.2 g of the mixture containing the small diameter group after the second treatment step and 70.8 g of the mixture containing the large diameter group after the second treatment step were prepared, and stirred at 1,500 rpm for 30 seconds with a mixer (AWATORI RENTARO ARE-310, manufactured by THINKY Corporation) to prepare a kneaded material (176 g = 174 g of positive electrode active material + 2 g of conductive auxiliary agent).

The above-described electrolytic solution A (64 g) was added to the obtained kneaded material (176 g), and the mixture was stirred at 1,500 rpm for 120 seconds with a mixer (AWATORI RENTARO ARE-310, manufactured by THINKY Corporation) to obtain a positive electrode material (P2).

In a case where a yield value of the obtained positive electrode material (P2) was measured by the method described above, it was 15 kPa.

In the obtained positive electrode material (P2), a volume ratio of the solid components and the liquid components was 48:52.

In addition, it was found that, from the particle size distribution of the active material in the obtained positive electrode material (P2), the maximum space filling rate was 68%, which was higher than the maximum space filling rate of approximately 66% by only the small diameter group and the maximum space filling rate of approximately 64% by only the large diameter group. As a result, it is presumed that an electrode containing an active material could be obtained with a high filling rate by using the positive electrode material (P2).

### [Example 3]

### (Classification step)

A positive electrode active material (lithium iron phosphate; "LFP NCO M23" manufactured by Aleees) was classified by an air classification device (Elbow-Jet manufactured by Nittetsu Mining Co.,Ltd.), and classified into two active material groups of a small diameter group having a peak at 2 µm and a large diameter group having a peak at 7 µm. After the classification, fine powder having a size of 0.2 µm or less was removed.

A mass ratio of the small diameter group and the large diameter group was small diameter group:large diameter group = 30%:70%.

### (First treatment step)

The small diameter group obtained in the classification step was subjected to a surface smoothing treatment by mechanochemistry for 10 hours in an N₂ purging environment at a rotation speed of 2,500 rpm, a temperature of 35°C to 60°C (temperature rise was suppressed by a refrigerant), using a circulation type Mechanofusion (registered trademark) system AMS manufactured by Hosokawa Micron Group. At this time, a circumferential speed of the shearing blade was set to 20 m/s, and the mill energy was 8,000 kJ/kg.

In addition, the large diameter group obtained in the classification step was subjected to the same surface smoothing treatment by mechanochemistry for 84 hours. At this time, a circumferential speed of the shearing blade was set to 20 m/s, and the mill energy was 67,200 kJ/kg.

### (Mixing step)

52 g of the small diameter group and 122 g of the large diameter group after the first treatment step were prepared, 174 g of the total amount of the positive electrode active material and 2 g of a conductive auxiliary agent (Ketjen black; "CARBON ECP600JD" manufactured by LION SPECIALTY CHEMICALS CO., LTD.) were stirred at 1,500 rpm for 30 seconds with a mixer (AWATORI RENTARO ARE-310, manufactured by THINKY Corporation) to prepare a kneaded material (176 g).

The above-described electrolytic solution A (64 g) was added to the obtained kneaded material (176 g), and the mixture was stirred at 1,500 rpm for 120 seconds with a mixer (AWATORI RENTARO ARE-310, manufactured by THINKY Corporation) to obtain a positive electrode material (P3).

In a case where a yield value of the obtained positive electrode material (P3) was measured by the method described above, it was 40 kPa.

In the obtained positive electrode material (P3), a volume ratio of the solid components and the liquid components was 48:52.

In addition, it was found that, from the particle size distribution of the active material in the obtained positive electrode material (P3), the maximum space filling rate was 70%, which was higher than the maximum space filling rate of approximately 65% by only the small diameter group and the maximum space filling rate of approximately 62% by only the large diameter group. As a result, it is presumed that an electrode containing an active material could be obtained with a high filling rate by using the positive electrode material (P3).

### [Comparative Example 1]

A positive electrode material (C1) was obtained in the same manner as in Example 1, except that the classification step in Example 1 was not performed, and the following surface treatment step and mixing step were performed.

### (Surface treatment step)

A positive electrode active material (lithium iron phosphate; "LFP NCO M121" manufactured by Aleees) was subjected to a surface treatment by mechanochemistry for 8 hours in an N₂ purging environment at a rotation speed of 2,500 rpm, a temperature of 25°C to 40°C (temperature rise was suppressed by a refrigerant), using a circulation type Mechanofusion (registered trademark) system AMS manufactured by Hosokawa Micron Group.

### (Mixing step)

174 g of the positive electrode active material after the surface treatment step and 2 g of a conductive auxiliary agent (Ketjen black; "CARBON ECP600JD" manufactured by LION SPECIALTY CHEMICALS CO., LTD.) were stirred at 1,500 rpm for 30 seconds with a mixer (AWATORI RENTARO ARE-310, manufactured by THINKY Corporation) to prepare a kneaded material (176 g).

The above-described electrolytic solution A (64 g) was added to the obtained kneaded material (176 g), and the mixture was stirred at 1,500 rpm for 120 seconds with a mixer (AWATORI RENTARO ARE-310, manufactured by THINKY Corporation) to obtain a positive electrode material (C1).

In a case where a yield value of the obtained positive electrode material (C1) was measured by the method described above, it was 45 kPa.

In the obtained positive electrode material (C1), a volume ratio of the solid components and the liquid components was 48:52.

### [Comparative Example 2]

A positive electrode material (C2) was obtained in the same manner as in Example 3, except that the classification step in Example 3 was not performed, and the following surface treatment step and mixing step were performed.

### (Surface treatment step)

A positive electrode active material (lithium iron phosphate; "LFP NCO M23" manufactured by Aleees) was subjected to a surface treatment by mechanochemistry for 10 hours in an N₂ purging environment at a rotation speed of 2,500 rpm, a temperature of 35°C to 60°C (temperature rise was suppressed by a refrigerant), using a circulation type Mechanofusion (registered trademark) system AMS manufactured by Hosokawa Micron Group.

### (Mixing step)

174 g of the positive electrode active material after the surface treatment step and 2 g of a conductive auxiliary agent (Ketjen black; "CARBON ECP600JD" manufactured by LION SPECIALTY CHEMICALS CO., LTD.) were stirred at 1,500 rpm for 30 seconds with a mixer (AWATORI RENTARO ARE-310, manufactured by THINKY Corporation) to prepare a kneaded material (176 g).

The above-described electrolytic solution A (64 g) was added to the obtained kneaded material (176 g), and the mixture was stirred at 1,500 rpm for 120 seconds with a mixer (AWATORI RENTARO ARE-310, manufactured by THINKY Corporation) to obtain a positive electrode material (C2).

In a case where a yield value of the obtained positive electrode material (C2) was measured by the method described above, it was 84 kPa.

In the obtained positive electrode material (C2), a volume ratio of the solid components and the liquid components was 48:52.

### [Example 4: manufacturing of electrode for battery and manufacturing of battery]

### <Production of positive electrode>

A positive electrode collector (a rectangular body having a size of 147.6 mm × 203.6 mm × 20 µm to which a protruding part (a connecting portion to a tab-shaped electrode) having a size of 30.0 mm × 34.4 mm × 20 µm was connected) in which an aluminum foil was welded to a PET film (20 µm) was prepared. A frame (148.6 mm × 204.6 mm × 325 µm) having an opening portion was disposed on the aluminum foil of the positive electrode collector. Next, 50 g of the positive electrode material (P2) was placed in the opening portion of the frame, and a blade was moved along the frame to remove the excess electrode material while molding the electrode material along the shape of the frame. Thereafter, the frame was removed to obtain a positive electrode in which a positive electrode film (148.6 mm × 204.6 mm × 325 µm) was formed on the positive electrode collector.

### <Production of negative electrode>

A negative electrode collector (a rectangular body having a size of 150.3 mm × 206.3 mm × 20 µm to which a protruding part (a connecting portion to a tab-shaped electrode) having a size of 30.0 mm × 33.0 mm × 20 µm was connected) in which a copper foil was welded to a PET film (20 µm) was prepared. A frame (151.3 mm × 207.3 mm × 335 µm) having an opening portion was disposed on the copper foil of the negative electrode collector. Next, 50 g of a negative electrode material (PA) having the following formulation was placed in the opening portion of the frame, and a blade was moved along the frame to remove the excess electrode material while molding the electrode material along the shape of the frame. Thereafter, the frame was removed to obtain a negative electrode in which a negative electrode film (151.3 mm × 207.3 mm × 335 µm) was formed on the negative electrode collector.

### -Negative electrode material (PA)-

First, the above-described electrolytic solution A (64 g) was prepared. Subsequently, 159 g was weighed as a total amount of a conductive auxiliary agent (carbon black; "C-NERGY SUPER C45" manufactured by Imerys Graphite & Carbon) and a negative electrode active material ("MESOPHASE GRAPHITE POWDER A (MGP-A)" manufactured by China Steel Chemical Corporation) in which a mass ratio thereof was 2.7 : 63.4, and both were stirred at 900 rpm for 18 seconds with a mixer (AWATORI RENTARO ARE-310, manufactured by THINKY Corporation) to prepare a kneaded material.

Next, the electrolytic solution A (64 g) was added to the obtained kneaded material (159 g), and the mixture was stirred at 900 rpm for 30 seconds with a mixer (AWATORI RENTARO ARE-310, manufactured by THINKY Corporation) to obtain the negative electrode material (PA).

In a case where a yield value of the obtained negative electrode material (PA) was measured by the method described above, it was 20 kPa.

In the obtained negative electrode material (PA), a volume ratio of the solid components and the liquid components was 52:48.

### <Production of single cell>

A separator (W-SCOPE CORPORATION, made of polyethylene, 220 mm × 260 mm × 20 µm) was placed on the negative electrode film of the negative electrode obtained by the above-described method, and the positive electrode obtained by the above-described method was placed on the separator so that the positive electrode film faced the negative electrode film.

Thereafter, the PET film portion (specifically, four sides around the electrode film approximately 3 mm outside the formed electrode film) around the electrode film was heat-welded and laminated at 200°C using a heat welding machine. Subsequently, the excess surrounding PET film was cut to produce a single cell (an example of a battery).

In the same manner, a total of 16 single cells were produced.

### <Lamination of single cells and attachment of tab-shaped electrode>

The 16 single cells obtained as described above were aligned and laminated in a mold frame to obtain a laminate.

In addition, a root part of a tab-shaped electrode (30 mm × 42 mm × 0.3 mm, an aluminum electrode in which a strip-shaped polypropylene resin was welded to the root part) was heat-welded to an end part of the positive electrode collector of each single cell of the obtained laminate with an ultrasonic welder. Furthermore, a root part of a tab-shaped electrode (30 mm × 42 mm × 0.3 mm, an electrode in which copper was coated with nickel, and a polypropylene resin was welded to the root) was heat-welded to an end part of the negative electrode collector of each single cell of the obtained laminate with an ultrasonic welder.

### <Production of laminated cell>

As an exterior member, an aluminum sheet was prepared in which a nylon film (thickness: 25 µm) was adhered to a surface of an aluminum foil (thickness: 40 µm) with an adhesive and a polypropylene film (thickness: 45 µm) was welded to a back surface. Two molded recesses of 155 mm × 212 mm × 5 mm were formed in the aluminum sheet (300 mm × 260 mm).

The obtained two molded aluminum sheets were used to cover the above-described laminate of the single cells from above and below, and three sides of the periphery of the molded aluminum sheet were heat-welded at 230°C using a heat welding machine.

Thereafter, the laminate wrapped in the molded aluminum sheet was set in a restraining device. Here, as the restraining device, a holding device that held the laminate wrapped in the molded aluminum sheet with a spring tightening load by two rectangular metal plates which sandwich the laminate wrapped in the molded aluminum sheet from the front and back surfaces and a spring-loaded bolt installed at four corners of the two rectangular metal plates was used, and the set load was 100 kgf.

Thereafter, the laminate wrapped in the molded aluminum sheet while being set in the restraining device was placed in a vacuum heat welding machine, vacuumed to -85 kPa, and then the remaining one side of the molded aluminum sheet which was not subjected to the heat welding was heat-welded at 180°C to seal the laminate. Thereafter, the vacuum heat welding machine was opened to the atmosphere, and the sealed product was taken out to obtain a laminated cell (S1).

### <Confirmation of battery performance>

Battery performance of the obtained laminated cell (S1) was confirmed as follows.

The front and back of the laminated cell obtained as described above were further tightened with the above-described restraining device at a set load of 150 kgf.

Subsequently, the laminated cell was set in a charging and discharging device with a constant-temperature tank while being set in the restraining device. Specifically, the laminated cells were placed in a constant-temperature tank at 25°C ± 3°C and connected to positive and negative terminals installed in the thermostatic chamber.

A cable connected to the positive and negative terminals was connected to the charging and discharging device outside the constant-temperature tank. Here, as the charging and discharging device, BCS-815 manufactured by Bio-Logic Science Instruments was used, and as the constant-temperature tank, BTC-408Hb manufactured by Espec Corp. was used.

The laminated cell was charged to approximately 15% of a designed battery capacity (37 Ah) using the above-described charging and discharging device (constant current of 6.2 A; up to approximately 555 mAh).

In the charging process, an excess amount of reaction gas was generated from the electrode film in the laminated cell, and the gas was accumulated in a margin portion of the molded aluminum sheet in the region where the load was not applied by the restraining device. Therefore, one side of the molded aluminum sheet was opened once, the aluminum sheet was put back into the thermal vacuum welding machine, the excess gas was degassed, and then the aluminum sheet was resealed.

The laminated cell after the degassing and re-sealing was set again in the charging and discharging device and fully charged up to 100% of the designed battery capacity (37 Ah). In the charging sequence by the charging and discharging device, the battery was charged at a constant current of 10.9 A until a battery voltage reached 3.6 V, and then fully charged while adjusting the current value so as not to exceed 3.6 V.

Subsequently, the fully charged laminated cell was stored in a constant-temperature tank at 38 ± 3°C for 21 days.

Thereafter, the laminated cell was stored in a constant-temperature tank at 25°C ± 3°C for 24 hours.

During the storage, since the battery capacity was decreased due to self-discharge, the battery was set again in the charging and discharging device (25°C) and charged at a constant current of 3.7 A until the battery voltage reached 3.6 V, and then the battery was fully charged while adjusting the current value so as not to exceed 3.6 V.

### <Measurement (1) of battery capacity>

The fully charged laminated cell was discharged with a constant current of 9.3 A using the charging and discharging device until the voltage reached 2 V, and the discharged battery capacity was measured.

The battery capacity of the laminated cell (S1) was 35.1 Ah.

### <Measurement (2) of battery capacity>

After the measurement (1) of the battery capacity, the laminated cell was charged at a constant current of 3.7 A with a battery voltage of 3.6 V by the charging and discharging device, and then fully charged while adjusting the current value so as not to exceed 3.6 V.

Thereafter, the laminated cell was discharged with a constant current of 18.6 A by the charging and discharging device until the voltage reached 2 V, and the discharged battery capacity was measured.

The battery capacity of the laminated cell (S1) was 34.8 Ah.

The disclosure of JP2022-120973 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

1. A production method of an electrode material, comprising:
a classification step of classifying an active material into two or more active material groups having different average particle diameters;
a first treatment step of subjecting each of the two or more active material groups to a surface smoothing treatment; and
a mixing step of mixing the two or more active material groups after the surface smoothing treatment with an electrolytic solution.

2. The production method of an electrode material according to claim 1,
wherein the surface smoothing treatment in the first treatment step is a surface treatment by mechanochemistry.

3. The production method of an electrode material according to claim 1, further comprising, after the first treatment step and before the mixing step:
a second treatment step of mixing each of the two or more active material groups after the surface smoothing treatment with a conductive auxiliary agent, and subjecting each of the obtained two or more mixtures to a mechanochemical treatment.

4. The production method of an electrode material according to claim 1,
wherein the classification of the active material in the classification step is carried out using an air classification device.

5. A manufacturing method of an electrode for a battery, comprising:
a step of producing an electrode material by the production method according to any one of claims 1 to 4; and
a step of molding the produced electrode material.

6. A manufacturing method of a battery, comprising:
a step of manufacturing a positive electrode by the manufacturing method according to claim 5.
